# NEW EUROPEAN PATENT SPECIFICATION

(11) **EP 2 382 031 B2**
(45) Date of publication and mention of the opposition decision: **14.12.2022**
(45) Mention of the grant of the patent: 17.05.2017
(21) Application number: 09835738.7
(22) Date of filing: 22.12.2009
(51) Int. Cl.: B01D 53/94, B01J 29/76, F01N 3/035, F02M 35/024, B01J 37/02, F01N 3/20, F01N 3/10, F01N 13/00

(54) **EMISSIONS TREATMENT SYSTEMS AND METHODS WITH CATALYZED SCR FILTER AND DOWNSTREAM SCR CATALYST**
ABGASBEHANDLUNGSSYSTEME UND -VERFAHREN MIT EINEM KATALYSIERTEN SCR-FILTER UND STROMABWÄRTIGEM SCR-KATALYSATOR
SYSTÈMES ET PROCÉDÉS DE TRAITEMENT D'ÉMISSIONS EMPLOYANT UN FILTRE RCS CATALYSÉ ET UN CATALYSEUR RCS AVAL

(30) Priority: 21.12.2009 US 643621; 22.04.2009 US 171567 P; 24.12.2008 US 140731 P
(43) Date of publication of application: 02.11.2011
(73) Proprietor: BASF Corporation, Florham Park, NJ 07932 (US)
(72) Inventor: BOORSE, R., Samuel, Skillman NJ 08558 (US); VOSS, E., Kenneth, Somerville NJ 08876 (US); DIETERLE, Martin, 67159 Ludwigshafen (DE)
(74) Representative: Altmann Stößel Dick Patentanwälte PartG mbB
(86) International application number: PCT/US2009/069131
(87) International publication number: WO 2010/075345

(56) References cited:
- WO-A1-2005/016497
- WO-A1-2007/145548
- WO-A1-2008/106519
- WO-A1-2009/099937
- WO-A2-03/054364
- WO-A2-2008/106518
- WO-A2-2008/106523
- US-A1- 2002 127 163
- US-A1- 2005 031 514
- US-A1- 2006 039 843
- US-A1- 2006 179 825
- US-A1- 2008 085 231
- US-A1- 2008 127 638
- US-B2- 7 229 597

## Description

The present invention relates to methods for treating gaseous emissions.

Diesel engine exhaust is a heterogeneous mixture which contains not only gaseous emissions such as carbon monoxide (CO), unburned hydrocarbons ("HC") and nitrogen oxides ("NOₓ"), but also condensed phase materials (liquids and solids) which constitute the so-called particulates or particulate matter. Often, catalyst compositions and substrates on which the compositions are disposed are provided in diesel engine exhaust systems to convert certain or all of these exhaust components to innocuous components. For example, diesel exhaust systems can contain one or more of a diesel oxidation catalyst, a soot filter and a catalyst for the reduction of NOₓ.

Oxidation catalysts that contain platinum group metals, base metals and combinations thereof are known to facilitate the treatment of diesel engine exhaust by promoting the conversion of both HC and CO gaseous pollutants and some proportion of the particulate matter through oxidation of these pollutants to carbon dioxide and water. Such catalysts have generally been contained in units called diesel oxidation catalysts ("DOC"), which are placed in the exhaust of diesel engines to treat the exhaust before it vents to the atmosphere. In addition to the conversions of gaseous HC, CO and particulate matter, oxidation catalysts that contain platinum group metals (which are typically dispersed on a refractory oxide support) promote the oxidation of nitric oxide (NO) to NO₂.

The total particulate matter emissions of diesel exhaust are comprised of three main components. One component is the solid, dry, solid carbonaceous fraction or soot fraction. This dry carbonaceous matter contributes to the visible soot emissions commonly associated with diesel exhaust. A second component of the particulate matter is the soluble organic fraction ("SOF"). The soluble organic fraction is sometimes referred to as the volatile organic fraction ("VOF"), which terminology will be used herein. The VOF can exist in diesel exhaust either as a vapor or as an aerosol (fine droplets of liquid condensate) depending on the temperature of the diesel exhaust. It is generally present as condensed liquids at the standard particulate collection temperature of 52 °C in diluted exhaust, as prescribed by a standard measurement test, such as the U.S. Heavy Duty Transient Federal Test Procedure. These liquids arise from two sources: (1) lubricating oil swept from the cylinder walls of the engine each time the pistons go up and down; and (2) unburned or partially burned diesel fuel.

The third component of the particulate matter is the so-called sulfate fraction. The sulfate fraction is formed from small quantities of sulfur components present in the diesel fuel. Small proportions of SO₃ are formed during combustion of the diesel, which in turn combines rapidly with water in the exhaust to form sulfuric acid. The sulfuric acid collects as a condensed phase with the particulates as an aerosol, or is adsorbed onto the other particulate components, and thereby adds to the mass of the total particulate matter.

One aftertreatment technology in use for high particulate matter reduction is the diesel particulate filter. There are many known filter structures that are effective in removing particulate matter from diesel exhaust, such as honeycomb wall flow filters, wound or packed fiber filters, open cell foams, sintered metal filters, etc. However, ceramic wall flow filters, described below, receive the most attention. These filters are capable of removing over 90% of the particulate material from diesel exhaust. The filter is a physical structure for removing particles from exhaust, and the accumulating particles will increase the back pressure from the filter on the engine. Thus the accumulating particles have to be continuously or periodically burned out of the filter to maintain an acceptable back pressure.

Ammonia selective catalytic reduction (SCR) is a NOₓ abatement technology that will be used to meet strict NOₓ emission targets in diesel and lean-burn engines. In the ammonia SCR process, NOₓ (defined as the sum of NO + NO₂) is reacted with ammonia (or an ammonia precursor such as urea) to form dinitrogen (N₂) over a catalyst typically composed of base metals.

Catalyzed wall flow filters containing a catalyst that promotes SCR of NOₓ assume two functions: removal of the particulate component of the exhaust stream and conversion of the NOₓ component of the exhaust stream to N₂. SCR-coated wall flow filters that can achieve NOₓ reduction goals require a sufficient loading of SCR catalyst composition on the wall flow filter under the usual space constraints in a vehicle. The gradual loss of the catalytic effectiveness of the compositions that occurs over lifetime through exposure to certain deleterious components of the exhaust stream or high temperatures augments the need for higher catalyst loadings of the SCR catalyst composition. However, preparation of coated wall flow filters with higher catalyst loadings can lead to unacceptably high back pressure within the exhaust system. An increase in backpressure can have an adverse impact on fuel efficiency.

An additional aspect for consideration in coating the wall flow filter is the selection of the appropriate SCR catalyst composition. First, the catalyst composition must be thermally durable so that it maintains its SCR catalytic activity even after prolonged exposure to higher temperatures that are characteristic of filter regeneration. For example, combustion of the soot fraction of the particulate matter often leads to temperatures above 700 °C and higher. Such temperatures render many commonly used SCR catalyst compositions such as mixed oxides of vanadium and titanium less catalytically effective. Second, the SCR catalyst compositions preferably have a wide enough operating temperature range so that they can accommodate the variable temperature ranges over which the vehicle operates. Temperatures below 300 °C are typically encountered, for example, at conditions of low load, or at startup. The SCR catalyst compositions are preferably capable of catalyzing the reduction of the NOₓ component of the exhaust to achieve NOₓ reduction goals, even at lower exhaust temperatures, particularly when the SCR catalyst is disposed on a filter substrate such as a wall flow filter. In general the SCR catalyst should have a high specific activity combined with a high hydrothermally stability.
US 2005/031514 A1 relates to an emission treatment system having an oxidation catalyst upstream of a soot filter coated with an SCR catalyst. US 4,961,917 concerns a method for the reduction of nitrogen oxides using a zeolite catalyst composition comprising a zeolite promoted with a metal such as iron or copper. US 2006/039843 A1 relates to an emissions treatment system comprising a zone coated catalyst to simultaneously reduce NOx and unreacted ammonia. WO 2007/145548 A1 concerns a selective catalytic reduction system for reducing nitric oxides emissions levels from a compression ignition engine which comprises a first reductant injector located upstream of a first catalyst comprising a selective catalytic reduction coating. WO 2008/106519 A1 relates to zeolite catalysts having the CHA crystal structure which are loaded with copper and to their use for removing nitrogen oxides from a gaseous medium.

Wall flow filters containing SCR catalysts and coating techniques have been proposed that allow higher SCR catalyst loadings on the wall flow filter, yet still allow the filter to maintain flow characteristics that achieve acceptable back pressures. Despite such proposed wall flow filters and coating techniques having higher SCR catalyst loadings, it would be desirable to provide wall flow filters and systems having lower catalyst loadings that permit management of backpressure and the catalytic function of the SCR catalyst. In addition, it would be desirable to provide catalytic articles, systems and methods that utilize particulate filters coated with an SCR catalyst at a loading that also achieves sufficient lower temperature NOₓ conversion when the exhaust gas stream passes through the filter, as well as exhibiting desirable hydrothermal aging characteristics.

### SUMMARY OF THE INVENTION

The present invention relates to a method for treating an engine exhaust gas stream having an initial NOx concentration and effective for conversion of NOx, comprising:
defining an exhaust gas system operational window based on a minimum targeted system NOx conversion and a maximum targeted percentage increase in system back pressure, the percentage increase in system back pressure based ion a comparison of system back pressure associated with a filter not loaded with catalyst to a system with a filter loaded with catalyst;
passing the gas stream through a particulate filter disposed downstream of the engine, the particulate filter loaded with a first SCR catalyst effective for NOx conversion, the gas stream having an intermediate NOx concentration after passing through the particulate filter, wherein there is no intervening SCR catalyst between the particulate filter and the engine, the exhaust gas stream containing a reductant comprising one or more of hydrocarbons, ammonia, urea and ammonia precursors; and
passing the gas stream having the intermediate NOx concentration through a second substrate loaded with a second SCR catalyst disposed downstream of the particulate filter effective for NOx conversion, wherein the gas stream exiting the emissions treatment system has a final NOx concentration, and wherein the system NOx conversion and the system back pressure are within the operational window,
   wherein the second substrate is a flow through substrate, wherein the particulate filter is a honeycomb wall flow filter which has a porosity in the range of 50% and 80% and has a loading of the SCR catalyst in the range of 6.1 g/l (0.1 g/in³) and 109.0 g/l (1.8 g/in³), wherein the first SCR catalyst is located within the walls of the particulate filter and
   wherein the first SCR catalyst and the second SCR catalyst are different, the first SCR catalyst being operable for NOx conversion at higher gas stream temperatures and the second SCR catalyst being operable for NOx conversion at lower gas stream temperatures, wherein the second SCR catalyst comprises a zeolite containing Cu and having the CHA structure.
A further embodiment of the present invention is set forth in sub-claim 2.

According to the invention, the particulate filter is a honeycomb wall flow filter comprising a plurality of longitudinally extending walls and the first SCR catalyst is located within the walls of the particulate filter.

In one or more embodiments, the filter comprises a high efficiency filter which removes at least about 70% of the particulate matter in the gas stream. In some embodiments, the particulate filter is a high efficiency filter which removes at least about 80% of the particulate matter in the gas stream.

According to the invention, the particulate filter has a porosity in the range of about 50% and 80%.

In one or more embodiments, the first SCR catalyst is coated on an axial length of the particulate filter that is less than the total axial length of the filter.

In one or more embodiments, conversion of NOₓ passing through the particulate filter is in the range of about 10% and 90% of the system NOₓ conversion.

In certain embodiments, the first SCR catalyst comprises a material that provides a NOₓ conversion at the first SCR catalyst of at least about 25% at 250 °C for an exhaust gas stream at a space velocity of about 80,000 h⁻¹ when the gas stream comprises about 500 ppm NO, about 500 ppm NH₃ and about 5% water in air. In a specific embodiment, the first SCR catalyst comprises a material that provides a NOₓ conversion at the first SCR catalyst of at least about 30% at 250 °C as measured at steady state at a space velocity of about 80,000 h⁻¹.

In one embodiment, the first SCR catalyst comprises a zeolite containing Cu and having a CHA structure. The second SCR catalyst comprises a zeolite containing Cu having a CHA structure.

In other embodiments, the first SCR catalyst comprises a mixed oxide of V₂O₅, WO₃ and TiO₂. The second SCR catalyst may comprise a mixed oxide of V₂O₅, WO₃ and TiO₂. In one or more embodiments, the first SCR catalyst comprises a Fe containing zeolite. In one or more embodiments, the second SCR catalyst comprises a Fe containing zeolite.

According to the invention, the first SCR catalyst and the second SCR catalyst are different, the first SCR catalyst being operable for NOₓ conversion at higher gas stream temperatures and the second SCR catalyst being operable for NOₓ conversion at lower gas stream temperatures, wherein the second SCR catalyst comprises a zeolite containing Cu and having the CHA structure.

The invention pertains to a method of treating an engine exhaust gas stream having an initial NOx concentration and effective for conversion of NOx, comprising: defining an exhaust gas system operational window based on a minimum targeted system NOx conversion and a maximum targeted percentage increase in system back pressure, the percentage increase in system back pressure based on a comparison of system back pressure associated with a filter not loaded with catalyst to a system with a filter loaded with catalyst; passing the gas stream through a particulate filter disposed downstream of the engine, the particulate filter loaded with a first SCR catalyst effective for NOx conversion, the gas stream having an intermediate NOx concentration after passing through the particulate filter, wherein there is no intervening SCR catalyst between the particulate filter and the engine, the exhaust gas stream containing a reductant comprising one or more of hydrocarbons, ammonia, urea and ammonia precursors; and passing the gas stream having the intermediate NOx concentration through a second substrate loaded with a second SCR catalyst disposed downstream of the particulate filter effective for NOx conversion, wherein the gas stream exiting the emissions treatment system has a final NOx concentration, and wherein the system NOx conversion and the system back pressure are within the operational window.

According to the inventive method, the particulate filter is a honeycomb wall flow substrate which has a porosity in the range of about 50% and 80% and has a loading of SCR catalyst in the range of about 6.1 g/l (0.1 g/in³) and 109.0 g/l(1.8 g/in³). In one method embodiment, the system NOₓ conversion is in the range of about 50% and 100% of the initial NOₓ concentration. In at least one method embodiment, the conversion of NOₓ by the particulate filter is in the range of about 10% to about 90% of the system NOₓ conversion. In one method embodiment, the minimum targeted system NOₓ conversion is about 60% and the maximum targeted percentage increase in system back pressure is about 25%. In one method embodiment, the first SCR catalyst is coated on an axial length of the particulate filter that is less than the total axial length of the filter.

### BRIEF DESCRIPTION OF THE DRAWINGS

Figure 1A is a schematic depiction of an emissions treatment system;
Figure 1B is a schematic depiction of an emissions treatment system;
Figure 2 is a perspective view of a wall flow filter substrate;
Figure 3 is a cross sectional view of a section of a wall flow filter substrate;
Figure 4 is a graph showing results of the backpressure and NOx conversion at 200 °C for Example 2 as a function of catalyst loading and a targeted minimum backpressure and NOx conversion at 200 °C a targeted maximum value for backpressure increase of 15% as guidelines for the samples;
Figure 5 is a graph showing the backpressure and the NOx conversion at 200 °C for Example 3 as a function of catalyst loading and the targeted minimum value for NOx conversion at 200 °C of 60% and a targeted maximum value for backpressure increase of 15% as guidelines for the samples;
Figure 6 is a graph showing the results of the backpressure and the NOx conversion at 200 °C for Example 4 as a function of catalyst loading for the series and the targeted minimum value for NOx conversion at 200 °C of 60% and a targeted maximum value for backpressure increase of 15% as guidelines for the samples; and
Figure 7 is a graph showing the results of cumulative cycle NOx conversion and cumulative cycle NH3 slip as a function of NSR for Example 5.

### DETAILED DESCRIPTION

Aspects of the invention relate to methods for treating engine exhaust. A system is provided that effectively provides simultaneous treatment of particulate matter, NOx and other gaseous components of diesel engine exhaust. The emission treatment system utilizes an integrated particulate filter and SCR catalyst and a downstream SCR catalyst on a substrate. Balancing of the increase in backpressure due to the system catalysts and NOx conversion can be achieved by reduced loading of the particulate filter and selection of the SCR catalyst composition. Such a system represents an optimal space utilization below the vehicle in terms of backpressure, catalyst volumes and SCR conversion for a given specific SCR activity of the catalyst and the desired regulatory emission targets.

Integration of NOₓ reduction and particulate removal functions into a single catalyst article is accomplished using a particulate filter in the form of a wall flow substrate coated with an SCR catalyst composition. Achieving practical levels of SCR catalyst composition on the wall flow substrate is important for providing sufficient catalytic activity to achieve mandated NOₓ reduction levels, and for lowering the combustion temperature of the soot fraction trapped on the filter. Achieving adequate levels of SCR washcoat compositions on the soot filter is also important to secure adequate durability for the catalyst during hydrothermal aging. In addition, over extended use of the emissions treatment system, catalysts are invariably exposed to various levels of catalyst poisons that may be derived through break down of lubricating oils, or may arise from impurities in the diesel fuel. Examples of such catalyst poisons include phosphorus, zinc, alkali metals and alkaline earth metals. Higher levels of catalyst compositions are therefore typically deposited on catalyst substrates to overcome the inevitable loss of catalytic activity.

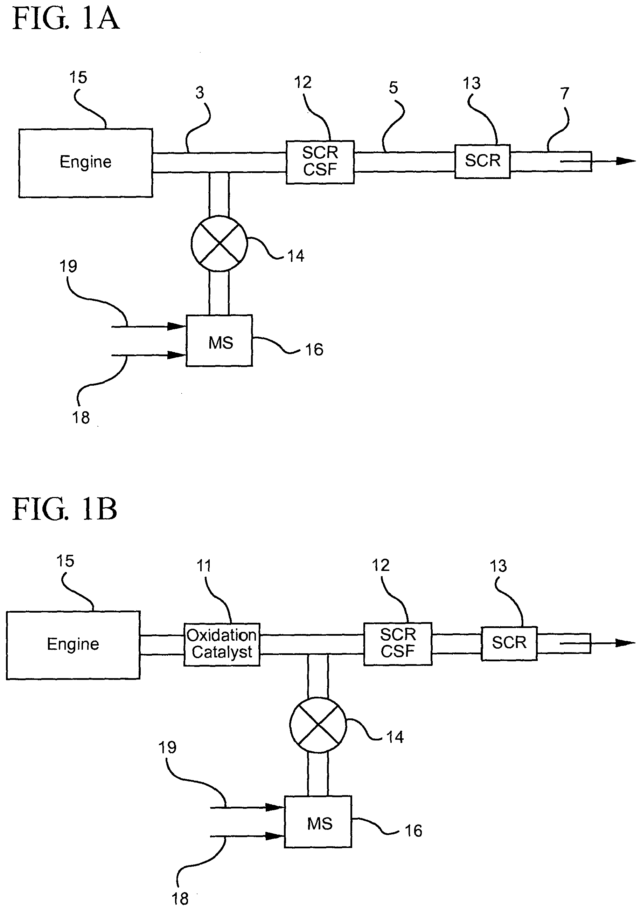

An emission treatment system is schematically depicted in Fig. 1A. As seen, the exhaust gas stream containing gaseous pollutants (including unburned hydrocarbons, carbon monoxide and NOx) and particulate matter from the engine 15 is introduced into the system. A reductant such as hydrocarbons, ammonia or any ammonia precursor (e.g., urea) or any other material showing a sufficient high reduction potential to facilitate the SCR reaction is injected as a spray via an injector in the form of a nozzle (not shown) into the exhaust stream. Aqueous urea shown on one line 18 can serve as an ammonia precursor which can be mixed with air on another line 19 in an injector including a mixing station 16. Injector can also include a valve 14, which can be used to meter precise amounts of aqueous urea which are converted in the exhaust stream to ammonia. The exhaust stream with the added reductant is conveyed to the particulate filter 12 containing a first SCR catalyst. On passing through the particulate filter 12, the NOx component is converted through the selective catalytic reduction of NOx with ammonia to nitrogen. There is no intervening SCR catalyst disposed between the engine 15 and the particulate filter 12.

The particulate matter including the soot fraction and the VOF are also largely removed (greater than 80%) by the particulate filter 12. The particulate matter deposited on the particulate filter 12 is combusted through the regeneration of the filter

Upon exiting the particulate filter 12, the gas stream then passes through a substrate 13 containing a second SCR catalyst. The substrate 13 is a flow through substrate and is disposed downstream of the particulate filter 12. The gas stream exiting the engine 15 contains an initial NOₓ concentration at location 3 before entering the particulate filter 12, an intermediate NOₓ concentration at location 5 between the particulate filter 12 and the downstream substrate 13, and a final NOₓ concentration at location 7 after passing through the flow through substrate 13. System conversion of NOₓ attained in the gas stream based on the initial NOₓ concentration and the final NOₓ concentration is greater than about 50%. The NOₓ conversion by the particulate filter 12 is in the range of about 10% to about 90% of the system NOₓ conversion integrally measured over a driving cycle (such as FTP 75 or under simulated reactor conditions). As used in this specification and in the claims, reference to NOx conversion and changes in system backpressure are made to steady state conversion (for example, as described in Examples 1 through 4), and transient testing under engine testing conditions (for example, as described in Example 5 HDD FTP).

The gas stream passing through the system described above causes the back pressure of the system to increase by less than about 75%, in specific embodiments, less than about 50 %, and in more specific embodiments, less than about 25%. The system back pressure increase is determined relative to the back pressure increase resulting from passing the gas stream through an uncoated filter. System back pressure is measured by an average of cold flow values at a space velocity, equal to the volumetric flow rate of the gas stream divided by the system volume, of between 20,000 h⁻¹ and 120,000 h⁻¹.

An emissions treatment system allows for operation within a window defined by a minimum targeted system NOₓ concentration and a maximum targeted percentage increase in system back pressure. This operational window provides a range in which high NOₓ conversion may be realized without causing an excessive and highly undesirable back pressure increase. In one embodiment, the minimum targeted system NOₓ conversion is about 60% and the maximum targeted percentage increase in system back pressure is about 25%. Other minimum targeted system NOₓ conversions and maximum targeted percentage increase in system back pressure can also be established in accordance with the present invention.

Suitable SCR catalyst compositions for use in the system are effective to catalyze the reduction of the NOₓ component at temperatures below 600 °C, so that adequate NOₓ levels can be treated even under conditions of low load which typically are associated with lower exhaust temperatures. Preferably, the catalyst article is capable of converting at least 50% of the NOₓ component to N₂, depending on the amount of reductant added to the system. In addition, SCR catalyst compositions for use in the system are also ideally able to aid in the regeneration of the filter by lowering the temperature at which the soot fraction of the particulate matter is combusted. According to the present invention, the second SCR catalyst comprises a zeolite containing Cu and having the CHA structure. In certain embodiments of the system, the first SCR catalyst can comprise a zeolite containing Cu and having a CHA structure, a mixed oxide of V₂O₅, WO₃ and TiO₂, or a Fe doped zeolite. According to the present invention, the compositions of the first SCR catalyst and the second SCR catalyst are different, wherein the first SCR catalyst is operable for NOₓ conversion at higher gas stream temperatures and the second SCR catalyst is operable for NOₓ conversion at lower gas stream temperatures. In addition, embodiments of the invention include combinations of different SCR active materials on different catalyst substrates or in a zone arrangement on a single substrate.

Useful SCR catalyst compositions used in the system also have resistance to unacceptable degradation of catalytic activity at temperatures greater than 650 °C. Such high temperatures are often encountered during the regeneration of particulate filters. SCR catalyst compositions should also resist degradation upon exposure to sulfur components, which are often present in diesel exhaust gas compositions. The first SCR catalyst is chosen to provide a system NOₓ conversion of at least about 25% at 250 °C and a space velocity of about 80,000 h⁻¹, under the test conditions referenced above. Preferably, the first SCR catalyst is chosen to provide a system NOₓ conversion of at least about 50% under these same conditions.

Suitable SCR catalyst compositions are described, for instance, in U.S. Pat. Nos. 4.961,917 (the '917 patent) and 5,516,497. Compositions disclosed in the '917 patent include one or both of an iron and a copper promoter present in a zeolite in an amount of from about 0.1 to 30 percent by weight, preferably from about 1 to 5 percent by weight, of the total weight of promoter plus zeolite. In addition to their ability to catalyze the reduction of NOₓ with NH₃ to N₂, the disclosed compositions can also promote the oxidation of excess NH₃ with O₂, especially for those compositions having higher promoter concentrations.

Zeolites used in such compositions are resistant to sulfur poisoning, sustain a high level of activity for the SCR process, and are capable of oxidation of excess ammonia with oxygen. These zeolites have pore size large enough to permit adequate movement of the reactant molecules NO and NH₃ into, and the product molecules N₂ and H₂O out of, the pore system in the presence of sulfur oxide molecules resulting from short term sulfur poisoning, and/or sulfate deposits resulting from long term sulfur poisoning. The pore system of suitable size is interconnected in all three crystallographic dimensions. As is well known to the those skilled in the zeolite art, the crystalline structure of zeolites exhibits a complex pore structure having more or less regularly recurring connections, intersections and the like. Pores having a particular characteristic, such as a given dimension diameter or cross-sectional configuration, are said to be one dimensional if those pores do not intersect with other like pores. If the pores intersect only within a given plane with other like pores, the pores of that characteristic are said to be interconnected in two (crystallographic) dimensions. If the pores intersect with other like pores lying both in the same plane and in other planes, such like pores are said to be interconnected in three dimensions, i.e., to be "three dimensional". It has been found that zeolites which are highly resistant to sulfate poisoning and provide good activity for both the SCR process and the oxidation of ammonia with oxygen, and which retain good activity even when subject to high temperatures, hydrothermal conditions and sulfate poisons, are zeolites which have pores which exhibit a pore diameter of at least about 7 Angstroms and are interconnected in three dimensions. Without wishing to be bound by any specific theory, it is believed that the interconnection of pores of at least 7 Angstroms diameter in three dimensions provides for good mobility of sulfate molecules throughout the zeolite structure, thereby permitting the sulfate molecules to be released from the catalyst to free a large number of the available adsorbent sites for reactant NOₓ and NH₃ molecules and reactant NH₃ and O₂ molecules. Any zeolites meeting the foregoing criteria are suitable for use in the practices of the present invention; specific zeolites which meet these criteria are USY, Beta and ZSM-20. Other metal ion exchanged zeolites may also satisfy the aforementioned criteria.

Zeolite compositions in accordance with the invention include zeolites containing Cu and having the CHA crystal structure. Exemplary CHA zeolites have a silica to alumina ratio (SAR) greater than about 15, and copper content exceeding about 0.2 wt%. In a more specific embodiment, the mole ratio of silica to alumina is from about 15 to about 256, and copper content from about 0.2 wt% to about 5 wt%. Other useful compositions for SCR include nonzeolitic molecular sieves having the CHA crystal structure. For example, silicoaluminophosphates such as SAPO-34, SAPO-44 and SAPO-18 may be used in accordance with one or more embodiments.

When deposited on the wall flow monolith substrates. such SCR catalyst compositions are deposited at concentrations in the range of about 6.1 g/l (0.1 g/in³) to 79.3 g/l (1.3 g/in³) to ensure that the desired NOₓ reduction and particulate removal levels are achieved and to secure adequate durability of the catalyst over extended use. The use of a zeolite having the CHA structure and containing copper in accordance with the invention is particularly useful in providing wall flow substrates having loadings in the range of about 6.1 g/l (0.1 g/in³) to 109.0 g/l (1.8 g/in³), and in more specific embodiments in the range of about 6.1 g/l (0.1 g/in³) to 79.3 g/l (1.3 g/in³).

A second emissions treatment system is illustrated in Fig. 1B, which is similar to the system shown in FIG. 1A. The system in FIG. 1 B includes an oxidation catalyst 11 located upstream of the particulate filter 12. In the oxidation catalyst 11, unburned gaseous and non-volatile hydrocarbons (i.e., the VOF) and carbon monoxide are largely combusted to form carbon dioxide and water. Removal of substantial proportions of the VOF using the oxidation catalyst, in particular, helps prevent too great a deposition of particulate matter on the particulate filter 12 (i.e., clogging), which is positioned downstream in the system. In addition, a substantial proportion of the NO of the NOₓ component is oxidized to NO₂ in the oxidation catalyst. The increased proportion of NO₂ in the NOₓ due to the catalytic action of the upstream oxidation catalyst facilitates the reduction of the NOₓ as compared to exhaust streams containing smaller proportions of NO₂ in the NOₓ component.

The oxidation catalyst 11 can be formed from any composition that provides effective combustion of unburned gaseous and non-volatile hydrocarbons (i.e., the VOF) and carbon monoxide. In addition, the oxidation catalyst should be effective to convert a substantial proportion of the NO of the NOₓ component to NO₂. As used herein, the term "substantial conversion of NO of the NOₓ component to NO₂ means at least 5%, at least 10%, at least 15%, at least 20%, at least 20%, at least 25%, at least 30%, at least 35%, at least 40%, and more specifically in the range of about 30% and 50%, and in some embodiments. up to about 60% conversion at a temperature of at least 200° C. Catalyst compositions having these properties are known in the art, and include platinum group metal- and base metal-based compositions. The catalyst compositions can be coated onto honeycomb flow-through monolith substrates formed of refractory metallic or ceramic (e.g., cordierite) materials. Alternatively, oxidation catalysts may be formed on to metallic or ceramic foam substrates which are well-known in the art. These oxidation catalysts, by virtue of the substrate on which they are coated (e.g., open cell ceramic foam), and/or by virtue of their intrinsic oxidation catalytic activity provide some level of particulate removal. Preferably, the oxidation catalyst removes some of the particulate matter from the exhaust stream upstream of the wall flow filter, since the reduction in the particulate mass on the filter potentially extends the time before forced regenerations.

One suitable oxidation catalyst composition that may be used in the emission treatment system contains a platinum group component (e.g., platinum, palladium or rhodium components) dispersed on a high surface area, refractory oxide support (e.g., gamma-alumina) which is combined with a zeolite component (preferably a beta zeolite). A suitable platinum group metal component is platinum. When the composition is disposed on a refractory oxide substrate, e.g., a flow through honeycomb substrate, the concentration of platinum is typically from about 283 to 3,398 g/l (10 to 120 g/ft³) of platinum.

Platinum group metal-based compositions suitable for use in forming the oxidation catalyst are also described in U.S. Pat. No. 5,100,632 (the '632 patent) The '632 patent describes compositions that
have a mixture of platinum, palladium, rhodium, and ruthenium and an alkaline earth metal oxide such as magnesium oxide, calcium oxide, strontium oxide, or barium oxide with an atomic ratio between the platinum group metal and the alkaline earth metal of about 1:250 to about 1:1, and particularly about 1:60 to about 1:6.

Catalyst compositions suitable for the oxidation catalyst may also be formed using base metals as catalytic agents. For example, U.S. Pat. No. 5,491,120 discloses
oxidation catalyst compositions that include a catalytic material having a BET surface area of at least about 10 m²/g and consist essentially of a bulk second metal oxide which may be one or more of titania, zirconia, ceria-zirconia, silica, alumina-silica, and alpha-alumina.

Also useful are the catalyst compositions disclosed in U.S. Pat. No. 5,462,907 (the '907 patent). The '907 patent teaches compositions that include a catalytic material
containing ceria and alumina each having a surface area of at least about 10 m²/g, for example, ceria and activated alumina in a weight ratio of from about 1.5:1 to 1:1.5. Optionally, platinum may be included in the compositions described in the '907 patent in amounts effective to promote gas phase oxidation of CO and unburned hydrocarbons but which are limited to preclude excessive oxidation of SO to SO₂. Alternatively, palladium in any desired amount may be included in the catalytic material.

Wall flow substrates useful for supporting the SCR catalyst compositions according to embodiments of the invention have a plurality of fine, substantially parallel gas flow passages extending along the longitudinal axis of the substrate. Typically, each passage is blocked at one end of the substrate body, with alternate passages blocked at opposite end-faces. Such monolithic carriers may contain up to about 700 or more flow passages (or "cells") per 6.45 cm² (per square inch) of cross section, although far fewer may be used. For example, the carrier may have from about 7 to 600, more usually from about 100 to 400, cells per 6.45 cm² (per square inch ("cpsi")). The cells can have cross sections that are rectangular, square, circular, oval, triangular, hexagonal, or are of other polygonal shapes. Wall flow substrates typically have a wall thickness between 0.005 and 0.25 cm (0.002 and 0.1 inches). Suitable wall flow substrates have wall thicknesses of between 0.005 and 0.0038 cm (0.002 and 0.015 inches).

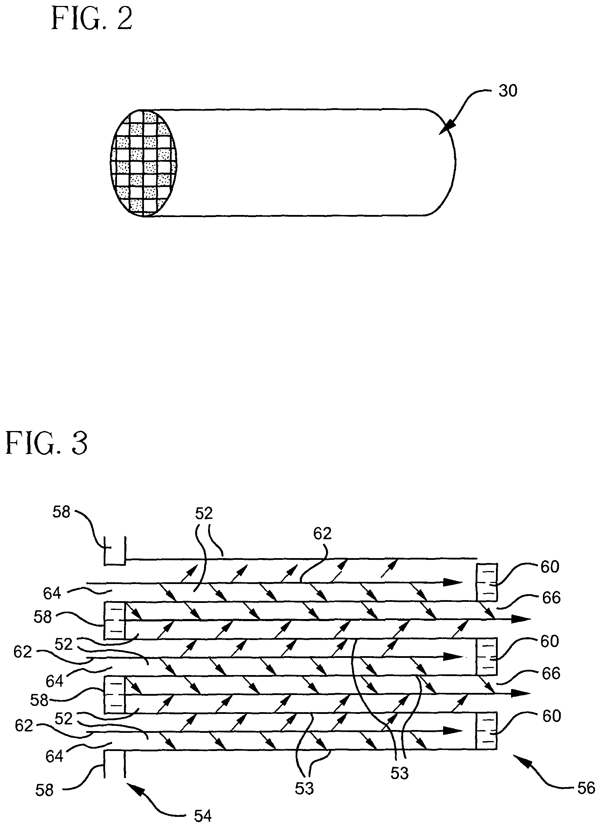

Figs. 2 and 3 illustrate a wall flow filter substrate 30 which has a plurality of passages 52. The passages are tubularly enclosed by the internal walls 53 of the filter substrate. The substrate has an inlet end 54 and an outlet end 56. Alternate passages are plugged at the inlet end with inlet plugs 58, and at the outlet end with outlet plugs 60 to form opposing checkerboard patterns at the inlet 54 and outlet 56. A gas stream 62 enters through the unplugged channel inlet 64, is stopped by outlet plug 60 and diffuses through channel walls 53 (which are porous) to the outlet side 66. The gas cannot pass back to the inlet side of walls because of inlet plugs 58.

Suitable wall flow filter substrates are composed of ceramic-like materials such as cordierite, alpha.-alumina, silicon carbide, silicon nitride, zirconia, mullite, spodumene, alumina-silica-magnesia or zirconium silicate, or of porous, refractory metal. Wall flow substrates may also be formed of ceramic fiber composite materials. Suitable wall flow substrates are formed from cordierite and silicon carbide. Such materials are able to withstand the environment, particularly high temperatures, encountered in treating the exhaust streams. The wall flow filter may be coated with SCR catalyst for it entire axial length, or a portion of the total axial length of the filter in a zone coated configuration.

Suitable wall flow substrates for use in the system include thin porous walled honeycombs (monoliths) through which the fluid stream passes without causing too great an increase in back pressure or pressure across the article. Normally, the presence of a clean wall flow article will create a back pressure of I inch water column to 69kPa (10 psig). According to the invention, the ceramic wall flow substrates used in the system are formed of a material having a porosity from 50% to 80%), and preferably having a mean pore size of at least 5 microns (e.g., from 5 to 30 microns).
The porosity of the material that forms the walls can be defined by density of the wall versus the theoretical density of material. In specific embodiments, the substrates have a porosity of at least 55% and have a mean pore size of at least 10 microns. When substrates with these porosities and these mean pore sizes are coated with the techniques described below, adequate levels of SCR catalyst compositions can be loaded onto the substrates to achieve excellent NOₓ conversion efficiency. These substrates are still able retain adequate exhaust flow characteristics, i.e., acceptable back pressures, despite the SCR catalyst loading. U.S. Pat. No. 4,329,162 discloses
suitable wall flow substrates. The particulate filter 12 can also be a high efficiency filter which removes at least about 70% of the particulate matter in the gas stream.

Typical wall flow filters in commercial use are typically formed with lower wall porosities, e.g., from about 35% to 50%, than the wall flow filters utilized in the invention. In general, the pore size distribution of commercial wall flow filters is typically very broad with a mean pore size smaller than 17 microns.

The porous wall flow filter used in this invention is catalyzed in that the wall of said element has thereon or contained therein one or more catalytic materials. Catalytic materials may be present on the inlet side of the element wall alone, the outlet side alone, both the inlet and outlet sides, or the wall itself may consist all, or in part, of the catalytic material. This invention includes the use of one or more layers of catalytic materials and combinations of one or more layers of catalytic materials on the inlet and/or outlet walls of the element. According to the invention, in the emissions treatment system, the first SCR catalyst is located within the walls of the particulate filter 12.

To coat the wall flow substrates with the SCR catalyst composition, the substrates are immersed vertically in a portion of the catalyst slurry such that the top of the substrate is located just above the surface of the slurry. In this manner slurry contacts the inlet face of each honeycomb wall, but is prevented from contacting the outlet face of each wall. The sample is left in the slurry for about 30 seconds. The substrate is removed from the slurry, and excess slurry is removed from the wall flow substrate first by allowing it to drain from the channels, then by blowing with compressed air (against the direction of slurry penetration), and then by pulling a vacuum from the direction of slurry penetration. By using this technique, the catalyst slurry permeates the walls of the substrate, yet the pores are not occluded to the extent that undue back pressure will build up in the finished substrate. As used herein, the term "permeate" when used to describe the dispersion of the catalyst slurry on the substrate, means that the catalyst composition is dispersed throughout the wall of the substrate.

The coated substrates are dried typically at about 100 °C and calcined at a higher temperature (e,g., 300 °C to 450 °C). After calcining, the catalyst loading can determined be through calculation of the coated and uncoated weights of the substrate. As will be apparent to those of skill in the art, the catalyst, loading can be modified by altering the solids content of the coating slurry. Alternatively, repeated immersions of the substrate in the coating slurry can be conducted, followed by removal of the excess slurry as described above.

### EXAMPLES:

### Example 1. SCR coating on a wall flow filter substrate

SCR catalyst was loaded on a 65% porosity cordierite filter core measuring 2.45 cm diameter by 7.62 cm length (1" diameter by 3" length). Thus, a metal exchanged alumino silicate zeolite having a CHA structure, ie Cu SSZ13, catalyst powder was mixed with water and milled so that 90% of the particles had a diameter of less than 5 microns (i.e. D90< 5 µ). The resulting slurry was diluted to 24% solids by weight. The filter core was dipped into the slurry until it was completely immersed and then removed to drain the excess slurry followed by blowing with compressed air to remove slurry from the walls. After all the excess slurry was removed from the walls and the channels, the part was dried under flowing air at 120 °C for 30 mins. The dried sample was then calicined in static air for 1 h at 450°C. The resulting catalyst loading on the part was 74.45g/l (1.22 g/in³). Pressure drop measurements were taken prior to and after coating using a Superflow bench. The flow was measured at 10, 15, 20, 25, 30, and 38 cm (4, 6, 8, 10, 12, and 15 ") of water prior to coating and again after coating. The reduction in flow was recorded and then averaged to give a single backpressure increase with coating of 9.53%. After coating, the sample was aged at 750 °C for 5 hrs under a flow of air with 10% steam. SCR performance of the coated sample was measured in a quartz lined reactor with a gas feed comprising 500 ppm NO, 500 ppm NH3, 5% H2O, 10% 02, and balance N2. The total flow gas flow through the sample was 22.5 L resulting in an hourly gas space velocity of approximately 37,000 hr-1. The sample's SCR catalytic activity was tested by stabilizing at 200 °C for 15 mins and then measuring the downstream NO, a NO2, N2O and NH3 gas concentrations with an FTIR. The gas concentrations were then taken at 250, 300, 350, and 450 °C in the same manner. The sample's "NOx" conversion was thus recorded as a % reduction in NO concentration at each temperature point and is given in table 1 below.

**Table 1, NOx conversion of SCR on a 65% porosity cordierite filter**

| | | | | | |
|---|---|---|---|---|---|
| Temperature | 200 | 250 | 300 | 350 | 450 |
| NOx | 69.2 | 93.8 | 95.1 | 91.1 | 81.4 |

### Example 2. Catalyst Loading study of SCR on 65% cordierite wall flow filter cores.

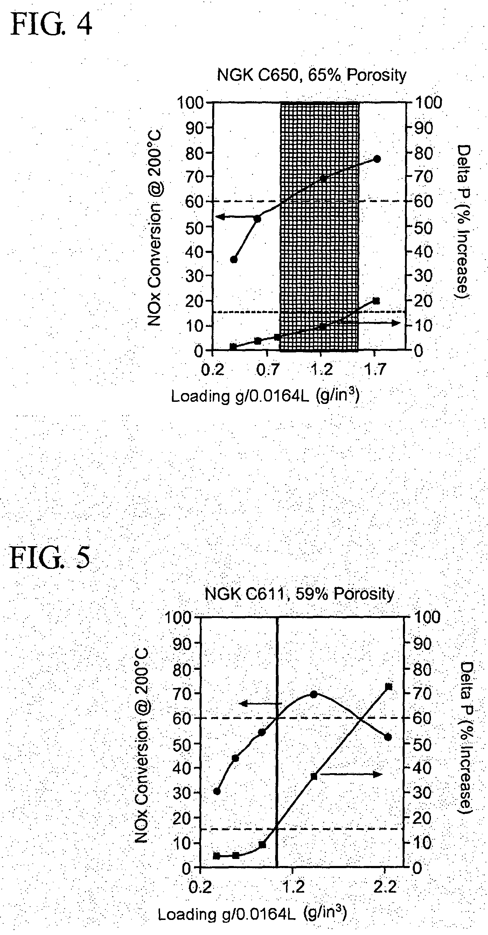

Using the methods of example 1, a series of samples was created by loading 65% porosity cordierite filter cores, 2.54 x 7.62 (1" x 3"), with an SCR catalyst of Cu SSZ13 using different solids slurries. Thus, slurries containing 10 to 35% solids by weight were used to create samples with from 24.41 to 115.15 g/l (0.4 to 1.9 g/in³) catalyst loading.
The backpressure increase and SCR catalytic performance were measured for each of the samples. The results of the backpressure and the NOx conversion at 200 °C are plotted in Figure 4 as a function of catalyst loading for the series. Figure 4 also shows the targeted minimum value for NOx conversion at 200 °C of 60% and a targeted maximum value for backpressure increase of 15% as guidelines for the samples. With these target values in mind, it is clear that at lower loadings, the SCR catalytic performance is below target while at high catalyst loadings the backpressure increase on coating is above target. The optimum catalyst loading range for best SCR operation with best back pressure is thus noted as the dashed box.

### Example 3. Catalyst Loading study of SCR on 60% cordierite filter cores.

Using the methods of example 1, a series of samples was created by loading 60% porosity cordierite filter cores, 2.54 x 7.62 (1" x 3", with an SCR catalyst of Cu SSZ13 using different solids slurries. Thus, slurries containing 10 to 30% solids by weight were used to create samples with from 24.41 to 134.25 g/l (0.4 to 2.2 g/in³) catalyst loading.
The backpressure increase and SCR catalytic performance was measured for each of the samples. The results of the backpressure and the NOx conversion at 200 °C are plotted in Figure 5 as a function of catalyst loading for the series. Figure 5 also shows the targeted minimum value for NOx conversion at 200 °C of 60% and a targeted maximum value for backpressure increase of 15% as guidelines for the samples. With these target values in mind, it is clear that at lower loadings, the SCR catalytic performance is below target while at high catalyst loadings the backpressure increase on coating is above target. The optimum catalyst loading range for best SCR operation with best back pressure is thus noted as the dashed line which is a much smaller range than the previous example #2. .

### Example 4. Catalyst Loading study of SCR on 60% SiC filter cores.

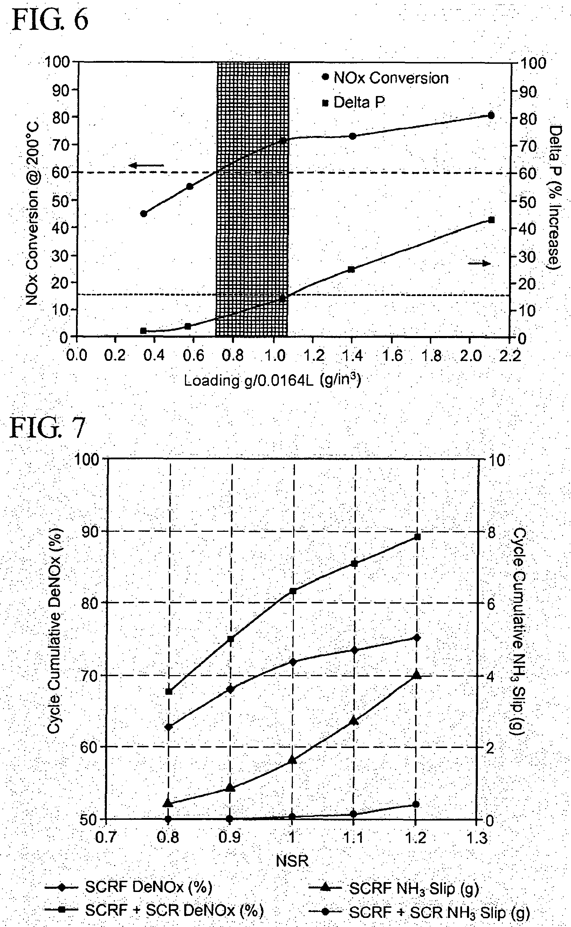

Using the methods of example 1, a series of samples was created by loading 65% porosity cordierite filter cores, 2.54 x 7.62 (1" x 3"), with an SCR catalyst of Cu SSZ13 using different solids slurries. Thus, slurries containing 10 to 30% solids by weight were used to create samples with from 20.75 to 128.15 g/l (0.34 to 2.1 g/in³) catalyst
loading. The backpressure increase and SCR catalytic performance was measured for each of the samples. The results of the backpressure and the NOx conversion at 200 °C are plotted in Figure 6 as a function of catalyst loading for the series. Figure 6 also shows the targeted minimum value for NOx conversion at 200 °C of 60% and a targeted maximum value for backpressure increase of 15% as guidelines for the samples. With these target values in mind, it is clear that at lower loadings, the SCR catalytic performance is below target while at high catalyst loadings the backpressure increase on coating is above target. The optimum catalyst loading range for best SCR operation with best back pressure is thus noted as the dashed box.

### Example 5. Engine testing of a SCR on Filter plus downstream SCR system.

SCR catalyst comprising an Fe Beta zeolite was loaded into a 23 x 25 cm (9" x 10") cordierite wall flow filter substrate of nominally 60% porosity using the methods of example #1. The loading of the SCR catalyst was 103.7 g/l (1.7 g/in³). The SCR catalyst on
filter (SCRF) plus SCR on flow through system was tested in an engine test cell so that the engine exhaust was directed through a DOC followed by the SCRF and then the SCR catalyst. The system was tested across the standard Federal Test Protocol (FTP) cycle. The NO, NO₂, and NH₃ concentrations were measured before the SCRF (noted as engine out emissions), after the SCRF and after the SCR (or tail pipe emissions). Thus, the NOx conversion across the SCRF and the SCRF plus SCR could both be calculated. The FTP test was repeated at a series of injected NH3/engine out NOx ratios (NSR) of 0.8 to 1.2. Figure 7 shows the results of cumulative cycle NOx conversion and cumulative cycle NH3 slip as a function of NSR. The NOx conversion over the SCRF component ranges from approximately 64% at an NSR of 0.8 to approximately 75% at an NSR of 1.2. The NOx conversion of the combination of the SCRF and the SCR over the same NSR range is from 68% to 89%. Additionally, the NH3 slip out of the SCRF increases from less than 0.5 g to 4 g over the cycle on increasing the NSR from 0.8 to 1.2 but the NH3 slip out of the SCRF + SCR goes from 0 to approximately 0,25 g over the same range. This shows that the SCRF part by itself is unable to completely convert all of the NOx coming from the engine but the combination of the two components, SCRF plus SCR is able to remove the NOx to acceptable levels while avoiding additional NH3 slip.

Reference throughout this specification to "one embodiment," "certain embodiments," "one or more embodiments" or "an embodiment" means that a particular feature, structure, material, or characteristic described in connection with the embodiment is included in at least one embodiment of the invention. Thus, the appearances of the phrases such as "in one or more embodiments," "in certain embodiments," "in one embodiment" or "in an embodiment" in various places throughout this specification are not necessarily referring to the same embodiment of the invention. Furthermore, the particular features, structures, materials, or characteristics may be combined in any suitable manner in one or more embodiments. The order of description of the above method should not be considered limiting, and methods may use the described operations out of order or with omissions or additions.

## Claims

1. A method for treating an engine exhaust gas stream having an initial NOₓ concentration and effective for conversion of NOₓ, comprising:
defining an exhaust gas system operational window based on a minimum targeted system NOₓ conversion and a maximum targeted percentage increase in system back pressure, the percentage increase in system back pressure based on a comparison of system back pressure associated with a filter not loaded with catalyst to a system with a filter loaded with catalyst;
passing the gas stream through a particulate filter disposed downstream of the engine, the particulate filter loaded with a first SCR catalyst effective for NOₓ conversion, the gas stream having an intermediate NOₓ concentration after passing through the particulate filter, wherein there is no intervening SCR catalyst between the particulate filter and the engine, the exhaust gas stream containing a reductant comprising one or more of hydrocarbons, ammonia, urea and ammonia precursors; and
passing the gas stream having the intermediate NOₓ concentration through a second substrate loaded with a second SCR catalyst disposed downstream of the particulate filter effective for NOₓ conversion, wherein the gas stream exiting the emissions treatment system has a final NOₓ concentration, and wherein the system NOₓ conversion and the system back pressure are within the operational window,
wherein the second substrate is a flow through substrate,
wherein the particulate filter is a honeycomb wall flow filter which has a porosity in the range of 50% and 80% and has a loading of the SCR catalyst in the range of 6.1 g/l (0.1 g/in³) and 109.0 g/l (1.8 g/in³), wherein the first SCR catalyst is located within the walls of the particulate filter and
wherein the first SCR catalyst and the second SCR catalyst are different, the first SCR catalyst being operable for NOₓ conversion at higher gas stream temperatures and the second SCR catalyst being operable for NOₓ conversion at lower gas stream temperatures, wherein the second SCR catalyst comprises a zeolite containing Cu and having the CHA structure.

2. The method of treating an engine exhaust gas stream of claim 1, wherein the minimum targeted system NOₓ conversion is 60% and the maximum targeted percentage increase in system back pressure is 25%.

## Patentansprüche

1. Verfahren zum Behandeln eines Motorabgasstroms, der eine anfängliche NOₓ-Konzentration aufweist und für die Umsetzung von NOₓ wirksam ist, umfassend:
Definieren eines Abgassystem-operativen Fensters, das auf einer angezielten Mindestsystem-NOₓ-Umsetzung und einer maximalen angezielten prozentualen Erhöhung des Systemgegendrucks basiert, wobei die prozentuale Erhöhung des Systemgegendrucks auf einem Vergleich des Systemgegendrucks, der mit einem nicht mit Katalysator beladenen Filter im Zusammenhang steht, zu einem System mit einem mit Katalysator beladenen Filter basiert;
Hindurchführen des Gasstroms durch einen Partikelfilter, der stromabwärts von dem Motor angeordnet ist, wobei der Partikelfilter mit einem ersten SCR-Katalysator beladen ist, der für die NOₓ-Umsetzung wirksam ist, wobei der Gasstrom eine NOₓ-Zwischenkonzentration nach dem Hindurchgehen durch den Partikelfilter aufweist, wobei kein intervenierender SCR-Katalysator zwischen dem Partikelfilter und dem Motor vorliegt, wobei der Abgasstrom ein Reduktionsmittel enthält, das eines oder mehrere von Kohlenwasserstoffen, Ammoniak, Harnstoff und Ammoniakvorläufern umfasst; und
Hindurchführen des Gasstroms, der die NOₓ-Zwischenkonzentration aufweist, durch ein zweites Substrat, das mit einem zweiten SCR-Katalysator beladen ist, der stromabwärts von dem Partikelfilter angeordnet ist, der für die NOₓ-Umsetzung wirksam ist, wobei der Gasstrom, der aus dem Abgasbehandlungssystem austritt, eine endgültige NOₓ-Konzentration aufweist und wobei die System-NOₓ-Umsetzung und der Systemgegendruck sich innerhalb des operativen Fensters befinden,
wobei das zweite Substrat ein Durchflusssubstrat ist,
wobei der Partikelfilter ein Wabenwandstromfilter ist, das eine Porosität im Bereich von 50 bis 80 % aufweist und eine Beladung des SCR-Katalysators im Bereich von 6,1 g/l (0,1 g/inch³) und 109,0 g/l (1,8 g/inch³) aufweist, wobei der erste SCR-Katalysator sich innerhalb der Wände des Partikelfilters befindet und
wobei der erste SCR-Katalysator und der zweite SCR-Katalysator verschieden sind, wobei der erste SCR-Katalysator für die NOₓ-Umsetzung bei höheren Gasstromtemperaturen und der zweite SCR-Katalysator für die NOₓ-Umsetzung bei niedrigeren Gasstromtemperaturen funktionsfähig ist, wobei der zweite SCR-Katalysator einen Zeolith umfasst, der Cu enthält und die CHA-Struktur aufweist.

2. Verfahren zum Behandeln eines Motorabgasstroms nach Anspruch 1, wobei die angezielte Mindestsystem-NOₓ-Umsetzung 60 % und die maximale angezielte prozentuale Erhöhung des Systemgegendrucks 25 % beträgt.

## Revendications

1. Procédé de traitement d'un courant de gaz d'échappement de moteur ayant une concentration de NOₓ initiale et efficace pour la conversion des NOₓ, comprenant :
la définition d'une fenêtre opérationnelle de système de gaz d'échappement basée sur une conversion de NOₓ de système minimale ciblée et une augmentation de pourcentage ciblée maximale en une contre-pression de système , l'augmentation de pourcentage en contre-pression de système basée sur une comparaison d'une contre-pression de système associée à un filtre non chargé de catalyseur à un système avec un filtre chargé avec un catalyseur ;
le passage du courant gazeux à travers un filtre à particules disposé en aval du moteur, le filtre à particules chargé avec un premier catalyseur RCS efficace pour la conversion des NOₓ, le courant gazeux ayant une concentration de NOₓ intermédiaire une fois passé à travers le filtre à particules, dans lequel il n'y a pas d'intervention de catalyseurs RCS entre le filtre à particules et le moteur, le courant de gaz d'échappement contenant un réducteur comprenant un ou plusieurs composés parmi des hydrocarbures, l'ammoniac, l'urée et des précurseurs d'ammoniac ; et
le passage du courant gazeux ayant la concentration de NOₓ intermédiaire à travers un deuxième substrat chargé avec un deuxième catalyseur RCS disposé en aval du filtre à particules efficace pour la conversion des NOₓ, dans lequel le courant gazeux sortant du système de traitement d'émissions a une concentration de NOₓ finale, et la conversion de NOₓ de système et la contre-pression de système se situant dans la fenêtre opérationnelle,
dans lequel le deuxième substrat est un substrat à écoulement traversant,
dans lequel le filtre à particules est un filtre en nid d'abeilles à écoulement par les parois qui a une porosité dans la gamme de 50 % à 80 % et a une charge du catalyseur RCS dans la gamme de 6,1 g/l (0,1 g/in³) à 109,0 g/l (1,8 g/in³), le premier catalyseur RCS étant situé à l'intérieur des parois du filtre à particules, et
dans lequel le premier catalyseur RCS et le deuxième catalyseur RCS sont différents, le premier catalyseur RCS étant utilisable pour la conversion des NOₓ à des températures de courant gazeux supérieures et le deuxième catalyseur RCS étant utilisable pour la conversion des NOₓ à des températures de courant gazeux inférieures, le deuxième catalyseur RCS comprenant une zéolithe contenant du Cu et ayant la structure CHA.

2. Procédé de traitement d'un courant de gaz d'échappement de moteur de la revendication 1, dans lequel la conversion de NOₓ de système minimale ciblée est de 60 % et l'augmentation du pourcentage en contre-pression de système maximal ciblé est de 25 %.
